# EUROPÄISCHE PATENTANMELDUNG

(11) **EP 2 552 000 A2**
(43) Veröffentlichungstag der Anmeldung: **30.01.2013**
(21) Anmeldenummer: 12177234.7
(22) Anmeldetag: 20.07.2012
(51) Int. Cl.: H02K 29/08, H02K 11/00

(54) **Elektromotor mit einem Rotorpositionssensor**

(30) Priorität: 28.07.2011 DE 102011079962
(71) Anmelder: ROBERT BOSCH GMBH, 70442 Stuttgart (DE)
(72) Erfinder: Henke, Torsten, 71332 Waiblingen (DE); Xu, Min, 70435 Stuttgart (DE)

(57) **Zusammenfassung**

Die Erfindung betrifft einen elektronisch kommutierten Elektromotor mit permanentmagnetisch ausgebildetem Rotor. Der Elektromotor weist einen Rotorpositionssensor auf, der ein Streumagnetfeld des permanentmagnetisch ausgebildeten Rotors erfasst und das Rotorpositionssignal in Abhängigkeit des Streumagnetfeldes erzeugt. Der Elektromotor braucht so vorteilhaft keinen gesonderten Rotorpositionsmagneten aufweisen, um die Rotorposition des Rotors zu erfassen.

## Beschreibung

### Stand der Technik

Die Erfindung betrifft einen Elektromotor, insbesondere einen elektronisch kommutierten Elektromotor. Der Elektromotor weist einen permanentmagnetisch ausgebildeten Rotor auf. Der Elektromotor weist auch einen Rotorpositionssensor auf, welcher ausgebildet ist, eine Rotorposition des Rotors zu erfassen und ein die Rotorposition repräsentierendes Rotorpositionssignal zu erzeugen.

Bei aus dem Stand der Technik bekannten Elektromotoren mit permanentmagnetisch ausgebildetem Rotor wird von einem Stator des Elektromotors ein rotierend umlaufendes Magnetfeld in Abhängigkeit des Rotorpositionssignals erzeugt. Zum Erfassen der Rotorposition kann der Rotor einen Rotorpositionsmagnet aufweisen, welcher mit dem Rotor verbunden und ausgebildet ist, ein magnetisches Sensorfeld zum Erfassen der Rotorposition durch den Rotorpositionssensor zu erzeugen.

### Offenbarung der Erfindung

Erfindungsgemäß ist der Rotorpositionssensor ausgebildet und angeordnet, ein Streumagnetfeld des permanentmagnetisch ausgebildeten Rotors zu erfassen und das Rotorpositionssignal in Abhängigkeit des Streumagnetfeldes zu erzeugen. Der Elektromotor braucht so vorteilhaft keinen gesonderten Rotorpositionsmagneten aufweisen, um die Rotorposition des Rotors zu erfassen.

Der Elektromotor weist bevorzugt eine Steuereinheit auf, welche ausgebildet ist, einen Stator in Abhängigkeit des Rotorpositionssignals zum Erzeugen eines magnetischen Drehfeldes zum Drehbewegen des Rotors zu bestromen.

In einer bevorzugten Ausführungsform ist der Rotor ausgebildet, ein Nutzmagnetfeld radial von einer Rotordrehachse abweisend und entlang eines Rotordrehachsenlängsabschnitts zu erzeugen. Der Rotor ist weiter ausgebildet, das Streumagnetfeld außerhalb des Rotordrehachsenlängsabschnitts auszusenden. Bevorzugt ist der Rotor ausgebildet, das Streumagnetfeld in einem an eine Rotorstirnfläche grenzenden Raum - bevorzugt mit wenigstens einer Querkomponente zur Rotordrehachse des Rotors - zu erzeugen. Bevorzugt erstreckt sich die Stirnfläche des Rotors mit wenigstens einer Querkomponente oder quer zur Rotordrehachse des Rotors. Der Magneto-Resistive-Sensor kann so parallel zur Stirnfläche verlaufende Feldlinien des Streumagnetfeldes erfassen, wobei eine Sensorebene bevorzugt parallel zur Stirnfläche angeordnet ist.

Dadurch kann vorteilhaft ein Streumagnetfeld im Bereich einer Stirnfläche des insbesondere zylinderförmig ausgebildeten Rotors genutzt werden, wohingegen das Nutzfeld, welches aus einer Mantelfläche des zylinderförmigen Rotors austritt, von einem um die Mantelfläche angeordneten Stator zum Drehbewegen des Rotors genutzt werden kann. Es wurde nämlich erkannt, dass auch aus einem Streumagnetfeld mittels eines magneto-resistiven Sensors eine zur Bestimmung einer Rotorposition nutzbare Signalqualität des Rotorpositionssignals insbesondere im räumlichen Bereich einer Stirnfläche erzielt werden kann.

In einer bevorzugten Ausführungsform weist der Rotor wenigstens einen ringförmig oder hohlzylinderförmig ausgebildeten Permanentmagnet auf. Der Permanentmagnet weist bevorzugt in dieser Ausführungsform eine Magnetisierung auf, welche entlang eines Rotorumfangs mehrere Magnetpolpaare aufweist. Jedes Magnetpolpaar weist einen Nordpol und einen Südpol auf. Der ring- oder zylinderförmige Magnet weist somit in Umfangsrichtung zueinander verschieden magnetisierte Bereiche auf.

Der Permanentmagnet kann in der ring- oder zylinderförmigen Ausbildung vorteilhaft aufwandsgünstig bereitgestellt werden.

In einer anderen Ausführungsform weist der Rotor eine Mehrzahl sich radial nach außen erstreckende Permanentmagnete auf. Bevorzugt weisen die Permanentmagnete einen rechteckigen Querschnitt auf, wobei die Permanentmagnete derart angeordnet sind, dass eine Längserstreckung im Querschnitt sich radial nach außen erstreckt. Die Permanentmagnete sind jeweils bevorzugt derart magnetisiert, dass in Umfangsrichtung aufeinanderfolgende Permanentmagnete sich parallel zur Rotordrehachse längserstreckende Flächenbereiche aufweisen, wobei zueinander gewandte Flächenbereiche von zueinander benachbarten Permanentmagneten jeweils dieselbe Polarität besitzen, also einander abstoßen. Die Flächenbereiche der aufeinanderfolgenden Permanentmagnete senden somit ein gemeinsames Magnetfeld aus, dessen Feldlinien aus einem Zwischenraum zwischen den gleichartig magnetisierten Flächenbereichen radial nach außen austreten und in einen nächstfolgenden Zwischenraum in Umfangsrichtung - mit dazu entgegengesetzter magnetischer Polarität - wiedereintreten. Der Rotor erzeugt in dieser Ausführungsform an einer Stirnfläche, welche sich senkrecht zur der Rotordrehachse erstreckt, eine Streumagnetfeld, dessen Feldlinien an der Stirnfläche austreten und dort von dem Rotorpositionssensor in einem Raum, welcher an die Stirnfläche des Rotors angrenzt, erfasst werden können.

Die Rotordrehachse verläuft bevorzugt koaxial zu einer Motorwellenlängsachse.

In einer bevorzugten Ausführungsform weist der Rotor eine Mehrzahl sich in Umfangsrichtung oder sich tangential zum Umfang erstreckende Permanentmagnete auf. Die Permanentmagnete sind bevorzugt in dem Rotor vergraben, sodass die Permanentmagnete von der Rotormantelfläche eines zylinderförmig ausgebildeten Rotors radial nach innen beabstandet angeordnet sind. Bevorzugt weisen die Permanentmagnete einen rechteckigen oder kreisabschnittsförmigen Querschnitt auf, wobei die Permanentmagnete derart angeordnet sind, dass eine Längserstreckung im Querschnitt sich in Umfangsrichtung oder tangential zum Umfang erstreckt.

Die Permanentmagnete erzeugen wie in der zuvor beschriebenen Ausführungsform sich radial nach außen erstreckenden Permanentmagneten ein Streumagnetfeld, welches im räumlichen Bereich, welcher an eine Stirnfläche des Rotors angrenzt, mittels des Rotorpositionssensors erfasst werden kann.

In einer bevorzugten Ausführungsform ist der Rotorpositionssensor ein magneto-resistiver Sensor. Der magneto-resistive Sensor ist beispielsweise ein AMR-Sensor (AMR = Anisotrope-Magneto-Resistive), ein GMR-Sensor (GMR = Giant-Magneto-Resistive), ein TMR-Sensor (TMR = Tunnel-Magneto-Resistive), oder ein CMR-Sensor (CMR = Colossal-Magneto-Resistive).

In einer anderen Ausführungsform ist der Rotorpositionssensor ein Hall-Sensor. Denkbar ist eine Kombination des Hall-Sensors mit dem ring- oder zylinderförmig ausgebildeten Permanentmagneten, insbesondere in einer Ausführungsform, in der der ring- oder zylinderförmige Permanentmagnet in Umgangsrichtung eine Mehrzahl von aufeinanderfolgenden Magnetpolpaaren aufweist.

Mittels des magneto-resistiven Sensors kann vorteilhaft die Rotorposition in Abhängigkeit eines von dem magneto-resistiven Sensors erzeugten sinus- und eines weiteren dazu kosinusförmigen Ausgangssignals eine Rotorposition des Rotors im Bereich eines Rotorumfangsabschnitts erfasst werden, welcher eine Nord-Südpolfolge von aufeinanderfolgenden Rotorpositionsmagneten aufweist.

Die Erfindung betrifft auch eine Lenkhilfe für ein Kraftfahrzeug. Die Lenkhilfe weist bevorzugt einen Elektromotor der vorbeschriebenen Art auf. Die Lenkhilfe ist bevorzugt ausgebildet, ein Fahrzeuglenken mittels eines von dem Elektromotor erzeugten Drehmoments zu unterstützen. Die Lenkhilfe weist bevorzugt einen Eingang für ein von einem Lenkwinkelsensor erzeugten Lenkwinkelsignal auf und ist ausgebildet, den Elektromotor in Abhängigkeit des Lenkwinkelsignals zum Erzeugen des unterstützenden Drehmoments anzusteuern. Die Lenkhilfe weist bevorzugt ausgangsseitig ein mit der Motorwelle verbundenes Ritzel auf, welches ausgebildet ist, in eine Zahnstange, insbesondere eine Spurstange einer Fahrzeuglenkung einzugreifen.

Die Erfindung betrifft auch ein Verfahren zum Betreiben eines elektronisch kommutierten Elektromotors.

Bei dem Verfahren wird mittels eines permanentmagnetisch ausgebildeten Rotors ein Nutzfeld zum Drehbewegen des Rotors erzeugt. Weiter wird bei dem Verfahren ein Rotorpositionssignal in Abhängigkeit eines Streufeldes erzeugt, welches von dem Rotor außerhalb eines Längsabschnitts einer Rotordrehachse ausgesendet wird, indem das Nutzfeld erzeugt wird.

Bei dem Verfahren wird das Nutzfeld bevorzugt von einer Drehachse des Rotors radial nach außen ausgesendet. Das Streufeld wird bevorzugt mit wenigstens einer Richtungskomponente in Richtung der Rotordrehachse ausgesendet. Das Streufeld kann so in einem Raum von dem zuvor erwähnten Rotorpositionssensor empfangen werden, welcher an eine Stirnfläche des Rotors angrenzt.

Die Erfindung wird nun im Folgenden anhand von Figuren und weiteren Ausführungsbeispielen beschrieben. Weitere vorteilhafte Ausführungsvarianten ergeben sich aus den in den abhängigen Ansprüchen und in den Figuren beschriebenen Merkmalen.
Figur 1 zeigt schematisch ein Ausführungsbeispiel für eine Lenkanordnung mit einem Elektromotor, welcher rotorpositionsmagnetlos ausgebildet ist;
Figur 2 zeigt schematisch ein Ausführungsbeispiel für einen Rotor in dem Permanentmagnete in einer sogenannten vergrabenen Anordnung von einer Rotoroberfläche beabstandet im Rotor angeordnet sind;
Figur 3 zeigt schematisch ein Ausführungsbeispiel für einen Rotor bei dem ein Permanentmagnet hohlzylinderförmig ausgebildet ist;
Figur 4 zeigt schematisch ein Ausführungsbeispiel für einen Rotor in dem Permanentmagnete radial abweisend angeordnet sind.
Figur 5 zeigt Diagramme mit beispielhaften Rotorpositionssignalen zu dem in Figur 2 gezeigten Rotor;
Figur 6 zeigt Diagramme mit beispielhaften Rotorpositionssignalen zu dem in Figur 3 gezeigten Rotor;
Figur 7 zeigt Diagramme mit beispielhaften Rotorpositionssignalen zu dem in Figur 4 gezeigten Rotor.

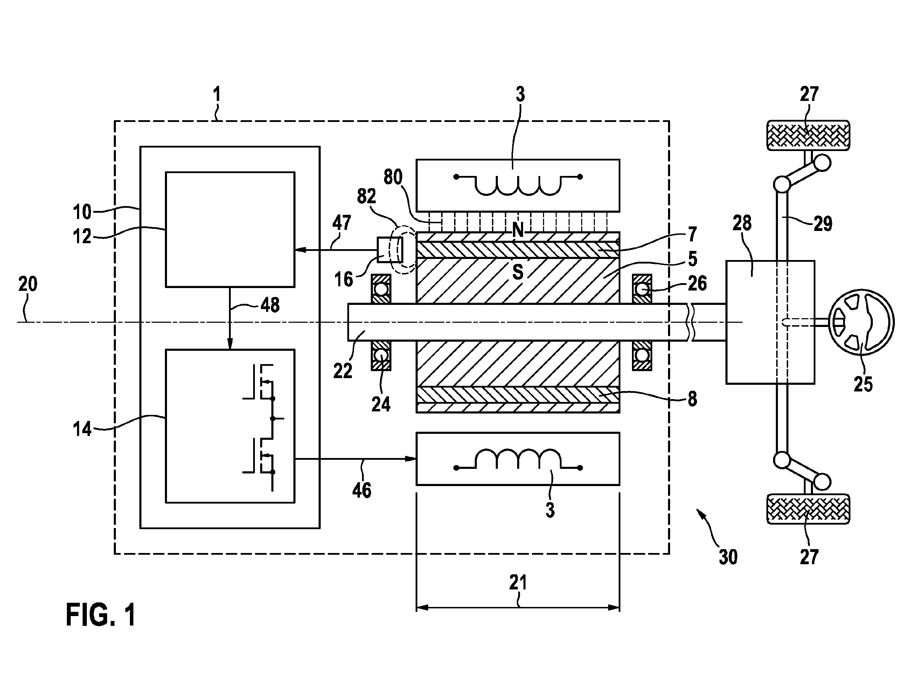

Figur 1 zeigt schematisch ein Ausführungsbeispiel für eine Lenkanordnung 30 mit einem Elektromotor 1. Der Elektromotor 1 weist einen Stator 3 auf. Der Stator 3 weist Statorspulen auf, beispielsweise drei Statorspulen, welche ausgebildet sind, ein magnetisches Drehfeld zu einem Drehbewegen eines Rotors 5 des Elektromotors 1 zu erzeugen. Der Rotor 5 des Elektromotors 1 ist permanentmagnetisch ausgebildet und weist dazu wenigstens einen Permanentmagnet, in diesem Ausführungsbeispiel acht Permanentmagneten auf, von denen in Figur 1 ein Permanentmagnet 7 und ein Permanentmagnet 8 in einer Schnittdarstellung des Rotors 5 dargestellt sind. Die Permanentmagneten 7 und 8 sind jeweils in dem zylinderförmig ausgebildeten Rotor 5 vergraben ausgebildet, das bedeutet, dass die Permanentmagneten 7 und 8 jeweils von einer Zylindermantelfläche des Rotors 5 radial beabstandet nach innen angeordnet sind. Der Rotor 5 ist um eine Rotordrehachse 20 drehbar gelagert. Dazu ist der Rotor 5 mit einer Rotorwelle 22 drehfest verbunden. Die Rotorwelle 22 ist mittels eines Lagers 24, und eines abtriebsseitigen Lagers 26 drehbar gelagert. Der Stator 3 ist über eine elektrische Verbindungsleitung 46 mit einer Leistungsendstufe 14 einer Steuereinheit 10 des Elektromotors 1 verbunden. Die Steuereinheit 10 weist auch eine Verarbeitungseinheit 12 auf, welche beispielsweise als FPGA (FPGA = Field-Programmable-Gate-Array), als ASIC (ASIC = Application-Specific-Integrated-Circuit), als Mikroprozessor oder Mikrocontroller ausgebildet ist. Die Verarbeitungseinheit 12 ist eingangsseitig über eine Verbindungsleitung 47 mit einem Rotorpositionssensor 16 verbunden. Der Rotorpositionssensor 16 ist in diesem Ausführungsbeispiel als Magnetresonanzsensor, insbesondere als AMR-Sensor ausgebildet. Der Rotorpositionssensor 16 ist ausgebildet, ein von einem Permanentmagnet, in diesem Ausführungsbeispiel von dem Permanentmagnet 7 des Rotors 5 stirnseitig von einer senkrecht zur Rotordrehachse 20 verlaufenden Stirnfläche ausgesendetes Streumagnetfeld 82 zu empfangen. Der Permanentmagnet 7 erzeugt in diesem Ausführungsbeispiel ein Nutzmagnetfeld 80, welches von dem Rotor 5 erzeugt und auf einem Rotordrehachsenlängabschnitt 21 ausgesendet wird mit einem von dem Stator 3 zum Drehbewegen des Rotors 5 erzeugten Rotormagnetfeld in magnetischer Wirkverbindung steht.

Die Verarbeitungseinheit 12 ist ausgangsseitig über eine Verbindungsleitung 48 mit der Leistungsendstufe 14 verbunden und ist ausgebildet, die Leistungsendstufe 14 über die Verbindungsleitung 48 zum Bestromen des Stators 3 derart anzusteuern, dass die Leistungsendstufe 14 den Stator 3 zum Erzeugen des magnetischen Drehfeldes bestromen kann.

Der Elektromotor 1 ist abtriebsseitig über die Motorwelle 22 mit einer Lenkhilfe für ein Kraftfahrzeug, in diesem Ausführungsbeispiel mit einem Lenkgetriebe 28, verbunden. Das Lenkgetriebe 28 ist mit einer Spurstange 29 verbunden, wobei die Motorwelle 22 im Bereich eines abtriebsseitigen Endes mit einer Verzahnung der Spurstange 29 in Wirkeingriff steht. Dargestellt ist auch ein Lenkrad 25, welches über eine Lenksäule mit der Spurstande 29 in Wirkeingriff steht. Der Elektromotor 1 ist ausgebildet, ein Drehmoment zum Unterstützen eines Lenkens zu einem von dem Lenkrad 25 aufgebrachten Lenkmoment zu erzeugen. Dargestellt sind auch mit der Spurstange 29 verbundene Räder 27. Die Leistungsendstufe 14 weist beispielsweise für jede Statorspule des Stators 3 eine H-Brücke, oder eine B6-Brücke zum Bestromen eines in Sternschaltung geschalteten Stators 3 auf.

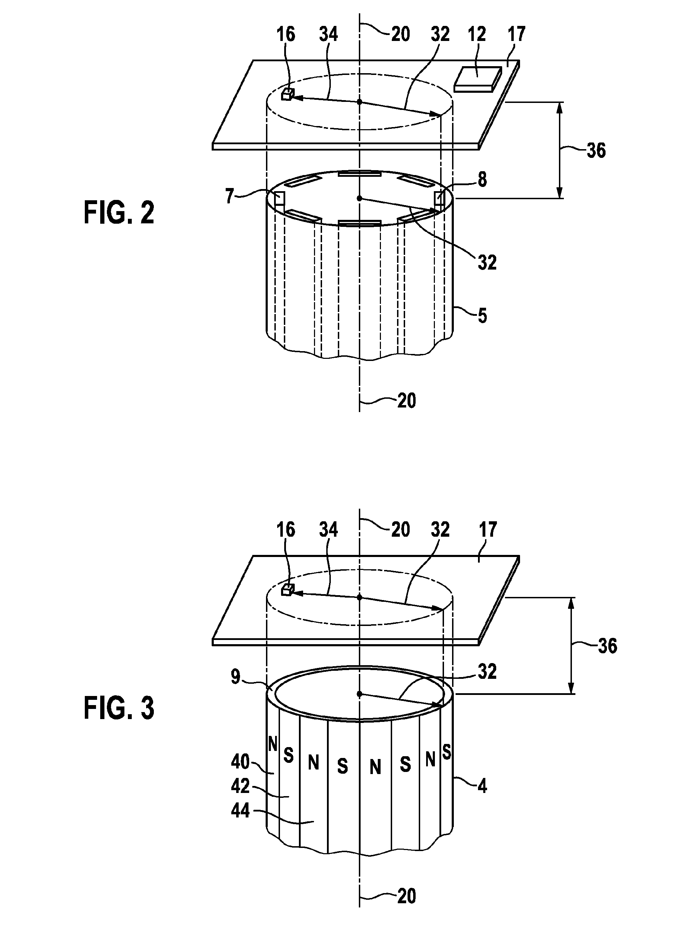

Figur 2 zeigt den in Figur 1 bereits dargestellten Rotor 5 schematisch in einer Aufsicht. Dargestellt ist auch der Rotorpositionssensor 16, welcher in der in Figur 2 dargestellten Anordnung mit einer Leiterplatte 17 verbunden ist. Die Leiterplatte 17 ist beispielsweise diamagnetisch ausgebildet. Die Leiterplatte 17 trägt in diesem Ausführungsbeispiel die in Figur 1 bereits dargestellte Verarbeitungseinheit 12 und ist mit dieser verbunden. Der Rotor 5 weist in diesem Ausführungsbeispiel acht "vergraben" angeordnete Permanentmagnete auf. Die Permanentmagnete sind auf der Stirnseite des Rotors 5 sichtbar und können an der Stirnseite das in Figur 1 bereits dargestellte Streumagnetfeld 82 aussenden. Die vergraben angeordneten Permanentmagnete, von denen die Permanentmagnete 7 und 8 beispielhaft bezeichnet sind, sind jeweils derart magnetisiert, dass in Rotorumfangsrichtung aufeinanderfolgende Permanentmagnete jeweils ein Magnetfeld mit zueinander entgegengesetzter Polarität radial nach außen durch die Mantelfläche des in diesem Ausführungsbeispiel zylinderförmig ausgebildeten Rotors 5 als magnetisches Nutzfeld 80 aussenden.

Der Rotorpositionssensor 16 ist von der Rotordrehachse 20 durch einen Abstand 34 radial nach außen beabstandet. Dargestellt ist auch ein Rotorumfang, welcher durch einen Radius 32 gekennzeichnet ist, wobei der Radius 32 einen Abstand des Rotorumfangs von der Rotordrehachse 20 repräsentiert.

Der Abstand 34 ist in diesem Ausführungsbeispiel kleiner als der Rotorradius 32.

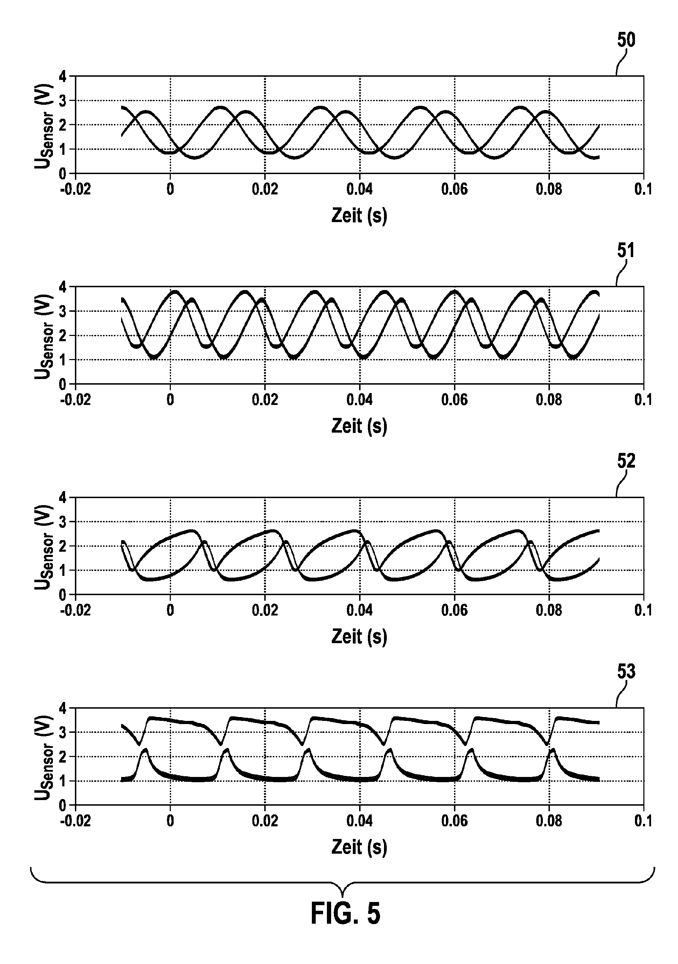

Ein optimales Verhältnis zwischen dem Abstand 34 und dem Radius 32 des Rotors 5 zum Erzielen einer hinreichend guten Signalqualität eines Rotorpositionssignals ist im Folgenden in Figur 5 beispielhaft dargestellt.

Die Leiterplatte 17 ist von der Stirnseite des Rotors 5 um den Abstand 36 beabstandet. Ein optimaler Abstand 36 zum Erzielen einer guten Signalqualität eines Rotorpositionssignals ist ebenfalls in Figur 5 beispielhaft dargestellt.

Figur 3 zeigt - schematisch - ein Ausführungsbeispiel für einen permanentmagnetisch ausgebildeten Rotor 4, welcher beispielsweise anstelle des Rotors 5 in Figur 1 Bestandteil des Elektromotors 1 sein kann. Der Rotor 4 weist - anders als der Rotor 5 - einen hohlzylinderförmig ausgebildeten Permanentmagneten 9 auf. Der Permanentmagnet 9 ist in Rotorumfangsrichtung rotorumfangsabschnittsweise mit zueinander verschiedenen Magnetpolen magnetisiert. Dadurch weist der Permanentmagnet 9 permanentmagnetische Magnetpolpaare auf, wobei Nord- und Südpol der aufeinanderfolgenden Magnetpolpaare entlang des Rotorumfangs einander abwechseln.

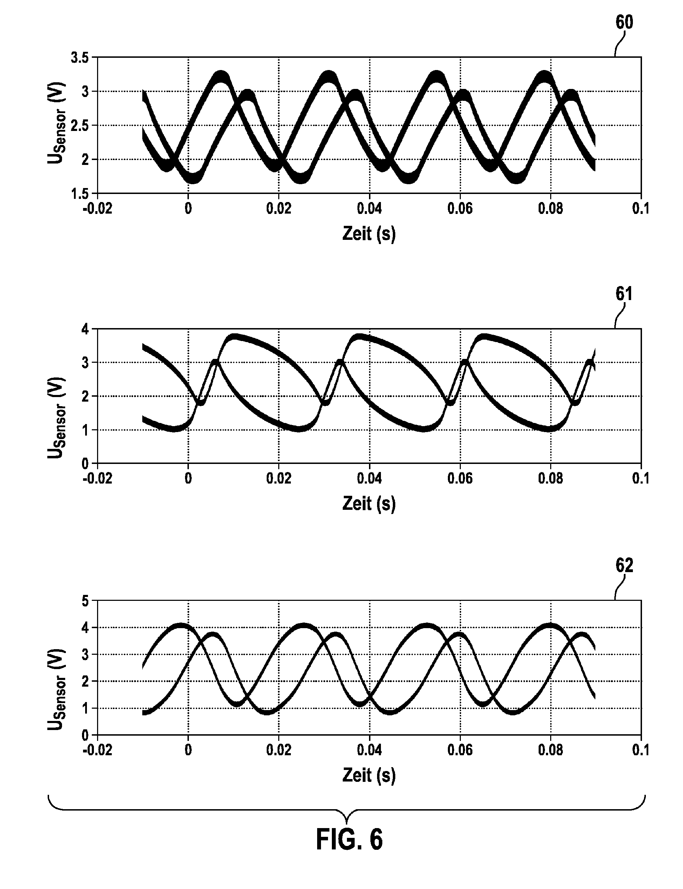

Dargestellt ist auch die Leiterplatte 17, welche mit dem Rotorpositionssensor 16 verbunden ist. Der Rotorpositionssensor 16 ist von der Rotordrehachse 20 um den Abstand 34 beabstandet. Der Abstand 34 ist kleiner als ein Radius 32 des Rotors 4. Eine optimale Signalqualität eines Rotorpositionssignals kann bei einem vorbestimmten Verhältnis zwischen dem Abstand 34 und dem Radius 32, weiter mit einem vorbestimmten Abstand 36 der Leiterplatte 17 von einer Stirnfläche des Rotors 4 erzielt werden. Figur 6 zeigt beispielhaft Rotorpositionssignale bei zueinander verschiedenen Abständen des Rotorpositionssensors 16.

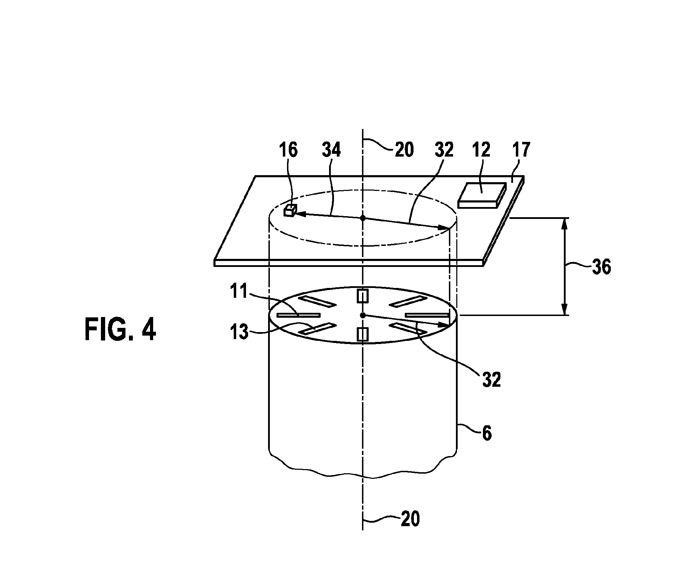

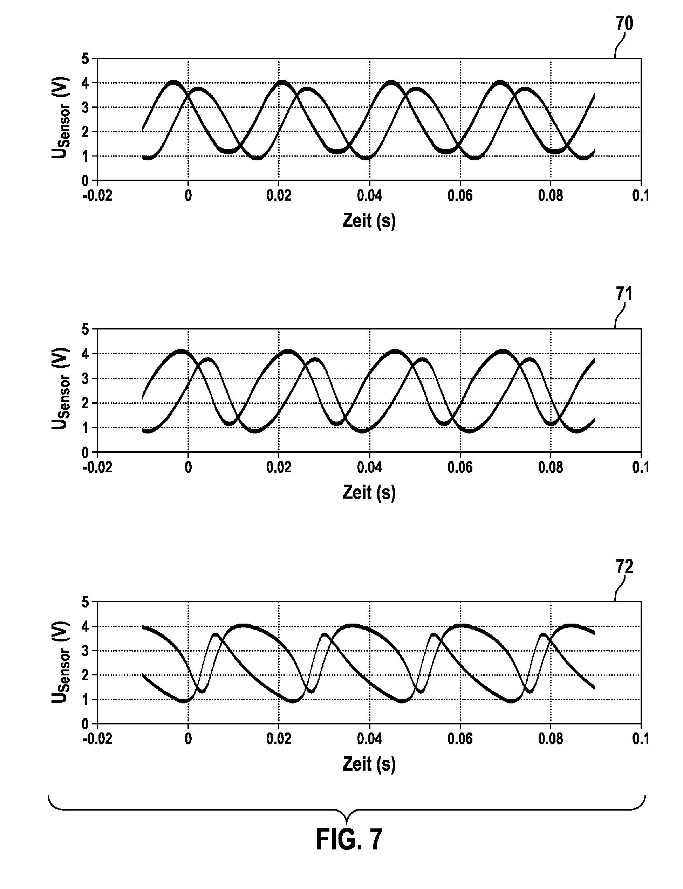

Figur 4 zeigt ein Ausführungsbeispiel für einen permanentmagnetisch ausgebildeten Rotor 6, welcher radial nach außen weisende Permanentmagnete aufweist. Die Permanentmagnete des Rotors 6 ragen dabei über einen Rotorumfangsradius 32 nicht hinaus. Die Permanentmagnete 11 und 13 sind beispielhaft bezeichnet. Dargestellt ist auch die Leiterplatte 17, welche mit der Verarbeitungseinheit 12 verbunden ist. Der mit der Leiterplatte 17 verbundene Rotorpositionssensor 16 ist von der Rotordrehachse 20 um den Abstand 34 beabstandet. Der Abstand 34 ist kleiner als der Radius 32 des Rotors 6. Eine optimale Signalqualität für das Rotorpositionssignal des Rotorpositionssensors 16 kann bei einem vorbestimmten Abstand 36 des Rotorpositionssensors 16 von einer Stirnfläche des Rotors 6 und bei einem vorbestimmten Verhältnis zwischen dem Abstand 34 und dem Radius 32 des Rotors 6 erzielt werden. Dies ist mittels zueinander verschiedener Signale in Figur 7 beispielhaft dargestellt.

Figur 5 zeigt vier Diagramme, nämlich ein Diagramm 50, 51, 52 und ein Diagramm 53. Die Diagramme 50, 51, 52 und 53 zeigen jeweils ein Rotorpositionssignal, umfassend ein Sinussignal und ein dazu phasenverschobenes Kosinussignal. Das Sinussignal und das osinussignal sind jeweils von einem magneto-resistiven Sensor des Rotorpositionssensors 16 erzeugt worden. Der Rotorpositionssensor 16 umfasst dazu wenigstens zwei magneto-resistive Sensoren, wobei in diesem Ausführungsbeispiel zwei magneto-resistive Sensoren in einer Ebene, mit einem Winkel zueinander versetzt angeordnet sind. Die Ebene des Rotorpositionssensors 16 verläuft in diesem Ausführungsbeispiel senkrecht zur Rotordrehachse 20. Denkbar ist auch eine parallel zur Rotordrehachse 20 verlaufende Erfassungsebene des Rotorpositionssensors 16. Je nach Verlauf der Streufeldlinien des Streumagnetfeldes kann zum Erzielen einer optimalen Signalqualität eine entsprechende Ausrichtung der Erfassungsebene des Rotorpositionssensors 16 gewählt werden.

Das Diagramm 50 zeigt das Ausgangssignal des Rotorpositionssensors 16, welches in diesem Ausführungsbeispiel einen sinusförmigen und einen- beziehungsweise kosinusförmigen Signalanteil aufweist. Sichtbar ist, dass das Rotorpositionssignal sehr sauber und frei von Oberwellen ausgebildet ist. Das Diagramm weist als Abszisse eine Zeitachse auf, und als Ordinate eine Amplitudenachse, auf der eine Ausgangsspannung des Rotorpositionssensors aufgetragen ist.

Das in Figur 50 gemessene Rotorpositionssignal wurde bei einem Abstand 36 von 2 Millimetern zu einer Stirnfläche des Rotors 5 erzielt. Der Abstand 34 war bei der Erzeugung des Rotorpositionssignals neun Millimeter kleiner als der Rotorradius, welcher 25 Millimeter betrug.

Dargestellt ist auch das Diagramm 51, welches ein Rotorpositionssignal des Rotorpositionssensors 16 zeigt, welches bei einem Abstand 36 von fünf Millimetern von der Stirnfläche des Rotors 5 erzeugt worden ist.

Der Abstand 34 war neun Millimeter kleiner als der Rotorradius, welcher 25 Millimeter betrug.

Das Diagramm 52 zeigt ein Rotorpositionssignal, welches von dem Rotorpositionssensor 16 bei einem Abstand 36 von fünf Millimetern und einem Abstand 34 erzeugt wurde, welcher fünf Millimeter kleiner war als der Rotorradius 32 von 25 Millimetern. Das so erzielte Rotorpositionssignal ist nicht sinusförmig ausgebildet, weist jedoch eine periodische Signalform auf und war bei einem Versuch noch ausreichend gut, um eine Rotorposition des Rotors 5 zu erfassen.

Das Diagramm 53 zeigt ein Rotorpositionssignal, welches bei einem Abstand 36 des Rotorpositionssensors 16 von einer Stirnfläche des Rotors 5 erfasst worden ist. Der Abstand 34 des Rotorpositionssensors 16 entsprach dem Radius 32. Sichtbar ist, dass das Rotorpositionssignal nicht sinusförmig ausgebildet ist. Es ist jedoch eine Periodizität sichtbar. Die Signalqualität war noch ausreichend, um eine Rotorposition des Rotors 5 zu erfassen.

Figur 6 zeigt drei Diagramme, nämlich ein Diagramm 60, ein Diagramm 61 und ein Diagramm 62, welche jeweils ein von dem Rotorpositionssensor 16 erzeugtes Rotorpositionssignal zusammen mit dem in Figur 3 bereits dargestellten Rotor 4 repräsentieren. Das Diagramm 60 zeigt ein beziehungsweiseRotorpositionssignal mit einem sinusförmigen und kosinusförmigen Signalanteil, welches bei einem Abstand 36 des Rotorpositionssensors 16 von einer Stirnfläche des Rotors 4 erzeugt wurde. Ein Abstand 34 des Rotorpositionssensors 16 von der Drehachse 20 war fünf Millimeter kleiner als der Radius 32 des Rotors 4. Der Radius 32 des Rotors 4 betrug 25 Millimeter.

Das Diagramm 61 zeigt ein Rotorpositionssignal, welches von dem Rotorpositionssensor 16 zusammen mit dem Rotor 4 erzeugt worden ist, wobei der Abstand 34 fünf Millimeter größer war als der Rotorradius 32. Der Abstand 36 von der Stirnfläche des Rotors 4 betrug fünf Millimeter. Sichtbar ist eine Periodizität des Rotorpositionssignals, das Rotorpositionssignal ist jedoch nicht wie in Diagramm 16 sinus- beziehungsweise kosinusförmig.

Das Diagramm 62 zeigt ein Rotorpositionssignal, erzeugt von dem Rotorpositionssensor 16 in Figur 3, wobei der Abstand 36 von der Stirnfläche des Rotors 4 8 Millimeter betrug und der Abstand 34 gleich dem Radius 32 des Rotors 4 war. Sichtbar ist eine noch gute Signalqualität des Rotorpositionssignals, welche noch ausreichend war, um eine Rotorposition des Rotors 4 mittels der Verarbeitungseinheit 12 in Figur 1 zu erfassen und den Stator 3 anzusteuern.

Figur 7 zeigt drei Diagramme, nämlich ein Diagramm 70, ein Diagramm 71 und ein Diagramm 72. Die Diagramme 70, 71 und 72 zeigen jeweils ein Rotorpositionssignal, erzeugt von dem Rotorpositionssensor 16 in Figur 4. In Figur 4 wirkt der Rotorpositionssensor 16 mit einem Rotor 6 zusammen, wobei der Rotor 6 radial nach außen weisende Permanentmagnete aufweist. Das Diagramm 70 zeigt ein Rotorpositionssignal, erzeugt durch den Rotorpositionssensor 16 beim Erfassen eines Streufeldes der Permanentmagneten des Rotors 5. Das Rotorpositionssignal gemäß dem Diagramm 70 weist nahezu keine sichtbaren Oberwellen auf. Der Abstand 36 des Rotorpositionssensors 16 von einer Stirnfläche des Rotors 6 betrug bei dem Rotorpositionssignal des Diagramms 70 fünf Millimeter, der Abstand 34 von der Rotordrehachse 20 war fünf Millimeter kleiner als der Rotorradius 32. Der Rotorradius 32 betrug 25 Millimeter. Das Diagramm 71 zeigt ein Rotorpositionssignal, welches von dem Rotorpositionssensor 16 zusammen mit dem Rotor 6 erfasst wurde, wobei der Abstand 36 fünf Millimeter betrug, und der Abstand 34 gleich dem Rotorradius 32 war. Sichtbar ist eine gute Periodizität bei sinusförmigem Signalverlauf des Rotorpositionssignals, welches bei einem Versuch zum Bestimmen der Rotorposition voll ausreichend war.

Das Diagramm 71 zeigt ein Rotorpositionssignal, welches von dem Rotorpositionssensor 16 bei einem Abstand 36 von fünf Millimetern von der Stirnfläche des Rotors 6 erzeugt wurde. Der Abstand 34 war fünf Millimeter größer als der Rotorradius 32. Der Rotorradius 32 betrug - wie beim Erzeugen des Rotorpositionssignals gemäß dem Diagramm 70 und 71 - 25 Millimeter. Sichtbar ist eine Periodizität des Rotorpositionssignals. Das Rotorpositionssignal gemäß dem Diagramm 72 war noch ausreichend, um eine Rotorposition des Rotors 6 zu erfassen.

## Patentansprüche

1. Elektromotor (1), insbesondere elektronisch kommutierter Elektromotor,
mit einem permanentmagnetisch ausgebildetem Rotor (4, 5, 6), und einem Rotorpositionssensor (16), welcher ausgebildet ist, eine Rotorposition des Rotors (4, 5, 6) zu erfassen und ein die Rotorposition repräsentierendes Rotorpositionssignal zu erzeugen,
**dadurch gekennzeichnet, dass**
der Rotorpositionssensor (16) ausgebildet und angeordnet ist, ein Streumagnetfeld (82) des permanentmagnetisch ausgebildeten Rotors (4, 5, 6) zu erfassen und das Rotorpositionssignal (50) in Abhängigkeit des Streumagnetfeldes (82) zu erzeugen.

2. Elektromotor (1) nach Anspruch 1,
**dadurch gekennzeichnet, dass**
der Rotor (4, 5, 6) ausgebildet ist, ein Nutzmagnetfeld (80) radial von einer Rotordrehachse (20) abweisend und entlang eines Rotordrehachsenlängsabschnitts 21 auszusenden und der Rotor (4, 5, 6) ausgebildet ist, das Streumagnetfeld (82) außerhalb des Rotordrehachsenlängsabschnitts (21) aus dem Rotor (4, 5, 6) auszusenden.

3. Elektromotor (1) nach Anspruch 1 oder 2,
**dadurch gekennzeichnet, dass**
der Permanentmagnet (9) ringförmig oder hohlzylinderförmig ausgebildet ist.

4. Elektromotor (1) nach Anspruch 1 oder 2,
**dadurch gekennzeichnet, dass**
der Rotor (6) eine Mehrzahl sich radial nach außen erstreckende Permanentmagnete (11, 13) aufweist.

5. Elektromotor (1) nach Anspruch 1 oder 2,
**dadurch gekennzeichnet, dass**
der Rotor (5) eine Mehrzahl sich in Umfangsrichtung erstreckende Permanentmagnete (7, 8) aufweist.

6. Elektromotor (1) nach einem der vorhergehenden Ansprüche,
**dadurch gekennzeichnet, dass**
der Rotorpositionssensor (16) ein Magneto-Resistiver-Sensor ist.

7. Elektromotor (1) nach einem der vorhergehenden Ansprüche,
**dadurch gekennzeichnet, dass**
der Rotorpositionssensor (16) ein Hall-Sensor ist.

8. Lenkhilfe (1, 28) für ein Kraftfahrzeug mit einem Elektromotor nach einem der vorgehenden Ansprüche, wobei die Lenkhilfe (1, 28) ausgebildet ist, ein Lenken mittels eines von dem Elektromotor (1) erzeugten Drehmoments zu unterstützen.

9. Verfahren zum Betreiben eines elektronisch kommutierten Elektromotors (1),
bei dem mittels eines permanentmagnetisch ausgebildeten Rotors (4, 5, 6) ein Nutzfeld zum Drehbewegen des Rotors (4, 5, 6) erzeugt wird, und ein Rotorpositionssignal in Abhängigkeit eines Streumagnetfeldes (82) erzeugt wird, welches von dem Rotor (4, 5, 6) außerhalb eines Rotordrehachsenlängsabschnittes (21) ausgesendet wird, in dem das Nutzfeld (80) ausgesendet wird.

10. Verfahren nach Anspruch 9,
bei dem das Nutzfeld (80) von einer Rotordrehachse (20) des Rotors (4, 5, 6) radial nach außen ausgesendet wird und das Streumagnetfeld (82) mit wenigstens einer Richtungskomponente in Richtung in der Rotordrehachse (20) ausgesendet wird.
